# EUROPÄISCHE PATENTSCHRIFT

(11) **EP 3 261 986 B1**
(45) Veröffentlichungstag und Bekanntmachung des Hinweises auf die Patenterteilung: **24.10.2018**
(21) Anmeldenummer: 16700754.1
(22) Anmeldetag: 15.01.2016
(51) Int. Cl.: C01B 13/11, H01T 19/00

(54) **OZONGENERATOR MIT POSITIONSABHÄNGIGER ENTLADUNGSVERTEILUNG**
OZONE GENERATOR WITH POSITION DEPENDENT CHARGE DISTRIBUTION
OZONISEUR À RÉPARTITION DE DÉCHARGE DÉPENDANT DE LA POSITION

(30) Priorität: 23.02.2015 DE 102015002103
(43) Veröffentlichungstag der Anmeldung: 03.01.2018
(73) Patentinhaber: Xylem IP Management S.à.r.l., 1259 Senningerberg (LU)
(72) Erfinder: FIEKENS, Ralf, 33758 Schlossholte-Stukenbrock (DE); FIETZEK, Reiner, 32049 Herford (DE); SALVERMOSER, Manfred, 32049 Herford (DE); BRÜGGEMANN, Nicole, 32130 Enger (DE)
(74) Vertreter: Lenzing Gerber Stute
(86) Internationale Anmeldenummer: PCT/EP2016/050790
(87) Internationale Veröffentlichungsnummer: WO 2016/134880

(56) Entgegenhaltungen:
- WO-A1-92/14677
- WO-A1-97/09268
- US-A- 5 956 562

## Beschreibung

Die vorliegende Erfindung betrifft einen Ozongenerator mit den Merkmalen des Oberbegriffs des Anspruchs 1, ein Flächengebilde mit den Merkmalen des Oberbegriffs des Anspruchs 8 und eine Elektrodenanordnung mit den Merkmalen des Oberbegriffs 13.

Gattungsgemäße Ozonerzeuger umfassen eine Vielzahl von Ozongeneratoren, die nach Art eines Rohrbündelwärmetauschers parallel zueinander zwischen zwei Rohrböden angeordnet sind. Die Rohre bilden in ihrem Innenraum Entladungsräume in Form von Hohlkathoden. In diesen Entladungsräumen sind Anodenstäbe mit Dielektrikum angeordnet, die im Betrieb mit einer Hochspannung beaufschlagt werden und die eine stille Entladung zwischen dem Anodenstab und dem Rohr hervorrufen. Durch diesen Zwischenraum wird sauerstoffhaltiges Gas oder reiner Sauerstoff geleitet. Die stille Entladung erzeugt in dem sauerstoffhaltigen Gas aus Sauerstoffmolekülen Ozonmoleküle. Der auf diese Weise mit Ozon angereicherte Gasstrom kann dann beispielsweise zu Desinfektionszwecken verwendet werden.

Der größte Teil der elektrischen Leistung, die einem Ozongenerator zugeführt werden muss, fällt als Abwärme an. Diese Abwärme wird durch Kühlmaßnahmen, wie beispielsweise durch eine Flüssigkeitskühlung der Außenelektrode abgeführt. Dabei heizt sich das Kühlwasser beim Durchtritt durch das Rohrbündel auf und wird in einem Kreislauf durch einen Wärmetauscher in einem Kühlaggregat auf eine Temperatur von wenigen Grad Celsius abgekühlt.

Ein Mechanismus, der den Wirkungsgrad eines Ozonerzeugers verschlechtert, ist der sich entlang der Rohre zwischen dem Kühlwassereintritt und dem Kühlwasseraustritt unvermeidbar entstehende Temperaturgradient.
Der Wirkungsgrad von Ozonerzeugern ist stark von der Temperatur im Entladungsspalt abhängig. Die Bildung von Ozon findet bevorzugt bei niedriger Temperatur statt. Zudem zerfällt das Ozon vermehrt mit steigender Temperatur. Dieser temperaturinduzierte Abbau von Ozon verringert den gesamten Wirkungsgrad des Ozonerzeugers. Um die Ozonausbeute zu erhöhen ist daher eine gezielte Beeinflussung der effektiven Reaktionstemperatur entlang des Ozongenerators erwünscht.
Aus der JP-H-0881205 ist ein Ozongenerator bekannt, der eine konische Außenelektrode aufweist, die in Anlage mit einem Dielektrikum steht, dass in einer ersten Ausführungsform eine über die Länge des Ozongenerators zunehmende Dicke und in einem zweiten Ausführungsbeispiel eine konstante Dicke aufweist. Diese Ausgestaltungen haben gemeinsam, dass die im Gasspalt über die Länge des Ozongenerators eingetragene Leistung kontinuierlich abnimmt. Dadurch wird die Temperaturerhöhung über die Länge des Ozongenerators reduziert, wodurch die effektive Reaktionstemperatur nahezu konstant gehalten werden kann. Nachteilig ist dabei, dass die Herstellung der Außenelektrode und des Dielektrikums relativ aufwendig und kostenintensiv ist.

WO-92/14677 offenbart einen Ozongenerator mit einer Hochspannungselektrode und einer Gegenelektrode. Die beide Elektroden sind aus Drahtwindungen ausgebildet. Die Abstände zwischen den Windungen können variiert werden.

Es ist Aufgabe der vorliegenden Erfindung einen Ozongenerator anzugeben, bei dem der Wirkungsgrad durch Verminderung der Elektrodenoberflächeneinheit zugeführten elektrischen Leistung in Strömungsrichtung des Gases erhöht wird, wobei der Ozongenerator möglichst einfach und kostengünstig aufgebaut ist und ein Flächengebilde sowie eine Elektrodenanordnung zur Verwendung in einem Gasstroms eines Ozongenerators anzugeben, bei denen der Wirkungsgrad des Ozongenerators durch Verminderung der Elektrodenoberflächeneinheit zugeführten elektrischen Leistung in Strömungsrichtung des Gases erhöht ist.
Der Begriff "Flächengebilde" ist aus der Textiltechnik bekannt (Englisch: woven or non-woven fabric). Als textiles Flächengebilde ist jedes flächige Gebilde zu bezeichnen, das aus textilen Rohstoffen nach einer Textiltechnologie hergestellt wird. Im Zusammenhang der vorliegenden Patentanmeldung wird dementsprechend unter einem Flächengebilde jedes plane, gekrümmte oder gewölbte flächige Gebilde verstanden, das nach einer Textiltechnologie hergestellt wird. Darunter fallen unter anderem Fadenverbundstoffe, wie Gewebe, Maschenstoffe, Geflechte und Netze, und Faserverbundstoffe, wie Vliesstoffe und Watten.

Diese Aufgabe wird von einem Ozongenerator mit den Merkmalen des Anspruchs 1, einem Flächengebilde mit den Merkmalen des Anspruchs 8 und einer Elektrodenanordnung mit den Merkmalen des Anspruchs 13 gelöst.

Danach ist ein Ozongenerator mit einer Hochspannungselektrode und wenigstens einer Gegenelektrode, die einen Zwischenraum begrenzen, in dem wenigstens ein Dielektrikum angeordnet ist und der von einem Gasstrom in Strömungsrichtung durchströmt wird, wobei die Hochspannungselektrode und die wenigstens eine Gegenelektrode mit einem Anschluss für eine elektrische Spannungsversorgung zur Erzeugung von stillen Entladungen versehen sind, vorgesehen, wobei ein Flächengebilde aus Draht in dem Gasstrom angeordnet ist, dessen Dichte in Strömungsrichtung abnimmt. Durch eine Abnahme der Dichte des Flächengebildes werden die Oberflächenpunkte, von denen die stillen Entladungen ausgehen, entlang des Ozongenerators variiert, so dass die eingetragene elektrische Leistung in Strömungsrichtung des Gases abnimmt. Ein Temperaturanstieg in Strömungsrichtung kann so positiv beeinflusst werden, was zu einer Erhöhung des Wirkungsgrades des Ozonerzeugers führt. Da die Geometrie des Ozongenerators möglichst einfach gewählt werden kann und die Erhöhung des Wirkungsgrades alleine durch das Flächengebilde aus Draht gebildet wird, ist der Ozongenerator einfach und kostengünstig herzustellen.

Dabei ist es vorteilhaft, wenn die freie Querschnittsfläche des Flächengebildes in Strömungsrichtung zunimmt. In Bereichen von freier Querschnittsfläche finden bei einer bestimmten angelegten Spannung keine Entladungen statt, da die Spannung nicht ausreicht, um diese Spaltweite zu zünden, so dass die Anzahl von Entladung pro Längeneinheit mit wachsendem Anteil von freier Querschnittsfläche abnimmt.

In einer Ausführungsform ist das Flächengebilde ein Geflecht, dessen Maschenweite in Strömungsrichtung zunimmt, vorzugsweise kontinuierlich. Geflechte sind einfach herzustellen und daher vorteilhaft.

Vorzugsweise ist die Hochspannungselektrode wenigstens teilweise aus dem Flächengebilde gebildet. Dabei kann auch vorgesehen sein, dass das Flächengebilde komplett die Hochspannungselektrode bildet.

In zwei bevorzugten Ausführungsformen bilden die wenigstens eine Gegenelektrode und die Hochspannungselektrode einen Plattenozonerzeuger oder einen Rohrozonerzeuger, bei dem die wenigstens eine Gegenelektrode und die Hochspannungselektrode rohrförmig und konzentrisch zueinander ausgerichtet sind, und das Flächengebilde eine runde Hohlschnur ist. Dabei werden Plattenozonerzeuger bevorzugt bei kleinen Ozonerzeugern eingesetzt, die meistens luftgekühlt sind. Rohrozonerzeuger werden hingegen bevorzugt in großen Ozonerzeugern eingesetzt, die eine Vielzahl von Ozongeneratoren aufweisen und größtenteils mit Wasser gekühlt werden.

Vorzugsweise ist ein Ein-Spalt-System mit einer einzigen Gegenelektrode vorgesehen, bei dem die Hochspannungselektrode aus dem Flächengebilde gebildet ist, und wobei das Dielektrikum in Anlage an der Gegenelektrode angeordnet ist.

Weiterhin vorgesehen ist ein Flächengebilde aus Draht zur Verwendung in einem Gasstrom eines Ozongenerators, dessen Dichte in dem Gasstrom entlang einer vom Gasstrom vorgegebenen Strömungsrichtung abnimmt.

Dabei ist es vorteilhaft, wenn die freie Querschnittsfläche des Flächengebildes in Strömungsrichtung kontinuierlich oder abschnittsweise zunimmt. In einer bevorzugten Ausführungsform ist das Flächengebilde ein Geflecht, dessen Maschenweite in Strömungsrichtung zunimmt.

In einer Ausführungsform kann auch vorgesehen sein, dass das Flächengebilde mehrstückig in einzelne Abschnitte ausgebildet ist, wobei die Flächengebilde der einzelnen Abschnitte verschiedene Dichten aufweisen. Dabei ist es vorteilhaft, wenn die einzelnen Abschnitte jeweils eine gleichbleibende Maschenweite aufweisen, wobei die Maschenweite in Strömungsrichtung von Abschnitt zu Abschnitt zunimmt.

Das Flächengebilde aus Draht kann als Elektrode fungieren, die mit einem Anschluss für eine elektrische Spannungsversorgung versehen ist.

Weiterhin ist eine Elektrodenanordnung mit einem zentralen elektrisch nichtleitenden Stab, einem den Stab umgebenden Flächengebilde und einem das Flächengebilde umgebenden dielektrischen Rohr, die mit einem Gasstrom durch das Flächengebilde beaufschlagbar ist, vorgesehen, wobei die Dichte des Flächengebildes in dem Gasstrom entlang einer vom Gasstrom vorgegebenen Strömungsrichtung abnimmt. Das Flächengebilde kann weiterhin die zuvor genannten Eigenschaften aufweisen.

Eine bevorzugte Ausführungsform der Erfindung wird nachfolgend anhand der Zeichnungen näher erläutert. Es zeigen:
- Fig. 1:: eine perspektive Darstellung einer Elektrodenanordnung aus dem Stand der Technik, sowie
- Fig. 2:: eine schematische Darstellung eines erfindungsgemäßen Flächengebildes.

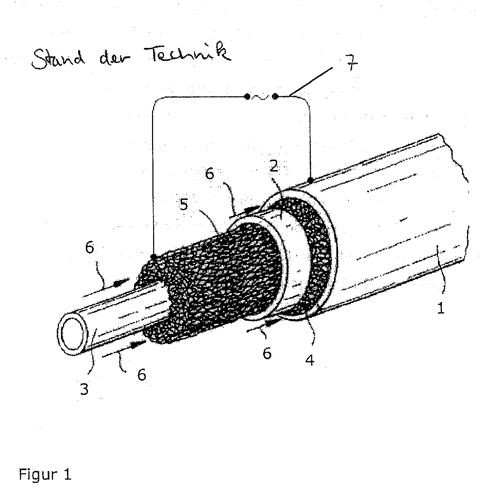

Figur 1 zeigt eine Elektrodenanordnung eines Ozongenerators, wie sie aus DE 10 2011 008 947 A1 bekannt ist. Solche Ozongeneratoren werden gruppiert in einem Ozonerzeuger eingesetzt. Die Ozongeneratoren sind dabei nach Art eines Rohrbündelwärmetauschers parallel zueinander zwischen zwei Rohrböden angeordnet und elektrisch parallel geschaltet. Der gezeigte Ozongenerator weist eine rohrförmigen Außenelektrode 1, ein ebenfalls rohrförmigen Dielektrikum 2 und einen innenliegenden Stab 3 auf, wobei die einzelnen Komponenten verkürzt und in Axialrichtung auseinander gezogen dargestellt sind. Die Anordnung ist rotationssymmetrisch. Die Außenelektrode 1, das Dielektrikum 2 und der Stab 3 sind konzentrisch zueinander ausgerichtet. Zwischen der Außenelektrode 1 und dem Dielektrikum 2 liegt ein Drahtgestrick 4, das den Zwischenraum ausfüllt. Entsprechend ist zwischen dem Dielektrikum 2 und dem Stab 3 ein Flächengebilde in Form eines Drahtgestricks 5 vorgesehen, das den dort befindlichen Zwischenraum ebenfalls ausfüllt.
Die Außenelektrode 1 ist als Edelstahlrohr ausgebildet. Die bei der Ozonproduktion entstehende Abwärme wird durch Kühlwasser, welches an der Außenseite der Außenelektrode zwischen den Rohrböden entlang geführt wird, gekühlt. Das Dielektrikum 2 ist ein Glasrohr. Die Drahtgestricke 4 und 5 sind vorzugsweise als sogenannte Rundhohlschnur ebenfalls aus einem Drahtgestrick aus Edelstahl gefertigt. Der im Zentrum der Elektrodenanordnung angeordnete Stab 3 ist ein Isolator, beispielsweise aus Glas oder aus einem anderen sauerstoff- und ozonkompatiblen Material gefertigt. Der Stab 3 kann massiv ausgeführt sein. Im Betrieb wird die Elektrodenanordnung mit einem sauerstoffhaltigen Einsatzgas beaufschlagt, welches die Drahtgestricke 4 und 5 in Richtung der Pfeile 6 durchströmt. Schematisch ist eine elektrische Spannungsversorgung 7 angedeutet, die einerseits mit der Außenelektrode 1 und andererseits mit dem Gestrick 5 kontaktiert ist. Die von der Spannungsversorgung 7 zur Verfügung gestellte Betriebsspannung bewirkt in dem Raum zwischen den Elektroden 1, 5 und dem Dielektrikum 2 eine stille elektrische Entladung, die aus dem Sauerstoff, der in Richtung der Pfeile 6 durch die Gestricke 4 und 5 strömt, Ozon generiert.

Bei dem dargestellten Aufbau ist die innere Elektrode allein von dem Gestrick 5 gebildet, während der Stab 3 als Isolator eine stützende Funktion ausübt, die das gleichmäßige Ausfüllen des Innenraums des Dielektrikums 2 mit dem Drahtgestrick 5 gewährleistet. Die Spaltweite bzw. die Schlagweite d ist der Abstand zwischen einer Elektrode und dem Dielektrikum. Die elektrische Spannungsversorgung 10 versorgt den Ozongenerator mit einer sinusförmigen Spannung. Durch die Form der Elektrode kommt es zu einer Überlagerung von Volumen- und Oberflächenladung.

Im Gegensatz zu Ozongeneratoren, die eine definierte Spaltweite besitzen, ergibt sich durch die Profilierung der Hochspannungselektrode 5 bzw. das Flächengebilde 5 spezifische Oberflächenpunkte, von denen die stillen Entladungen ausgehen.

Die Temperatur im Gasspalt hängt unteranderem von der Wandtemperatur (Kühlmitteltemperatur) aber auch von der eingetragenen elektrischen Leistung ab. Die eingetragene elektrische Leistung ist wiederrum abhängig von der gezündeten Spaltweite und der Anzahl der Entladungen.

Erfindungsgemäß werden die zur Entladung zur Verfügung stehenden Oberflächenpunkte entlang des Ozongenerators mittels der Ausgestaltung des Flächengebildes variiert, so dass die eingetragene elektrische Leistung in Strömungsrichtung des Gases abnimmt. Die mittlere Spaltweite bleibt dabei im Wesentlichen konstant und die Anzahl der Entladungen pro Längeneinheit nimmt ab.

Die Variation der Dichte des Flächengebildes kann dabei sowohl kontinuierlich als auch diskontinuierlich erfolgen.

Die Anzahl der Entladungen pro Längeneinheit wird entlang des Ozonerzeugers durch eine Veränderung der Verteilung der Oberflächenpunkte, von denen Entladungen ausgehen, beeinflusst, wobei das Flächengebilde die Oberflächenpunkte bildet. Der Abstand zwischen der Außen- und der Innenelektrode sowie die Schlagweite bleiben dabei im Mittel konstant.

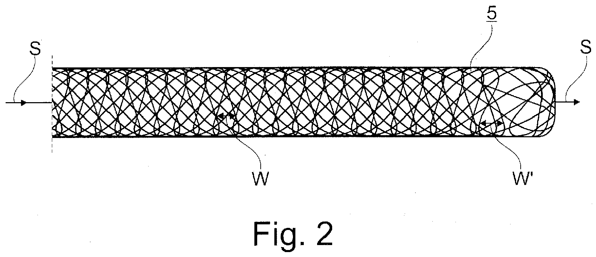

In einer ersten Ausführungsform ist es vorgesehen, die Verteilung der Oberflächenpunkte durch eine Veränderung der Dichte des Flächengebildes zu erzeugen. Das Flächengebilde erzeugt eine Verteilung von spezifischen Oberflächenpunkten, von denen Entladungen ausgehen. Die restliche Fläche der Elektrode steht nicht für die Erzeugung von Entladungen zur Verfügung. Durch Variation der Dichte des Flächengebildes bzw. des freien Querschnitts des Flächengebildes in Strömungsrichtung des Gases kann die Anzahl der Entladungen pro Längeneinheit reduziert werden. Eine Variationsmöglichkeit besteht darin, bei einer Elektrode aus Drahtgeflecht, die Maschenweite W, W' anzupassen, siehe Fig. 2. Die Maschenweite W, W' nimmt dabei in Strömungsrichtung S zu, so dass die Anzahl der Entladungen pro Längeneinheit in Strömungsrichtung S abnimmt.

Die Hochspannungselektrode ist ein elektrisch leitendes Material, vorzugsweise Edelstahl. Die Hochspannungselektrode kann ein Drahtgeflecht oder ein Gestrick, ein Gewebe aber auch eine Drahtwicklung sein. Faserige Gebilde wie Fliese oder Filze sind ebenso geeignet.

In einer Ausführungsform, erstreckt sich diese Hochspannungselektrode bis ans Dielektrikum, d.h. es gibt Punkte an denen das Geflecht, Gewebe oder dergleichen an dem Dielektrikum anliegt.

Der erfindungsgemäße Ozongenerator ist nicht auf rohrförmige Elektrodenanordnung begrenzt. Je nach Anwendung kann der Ozongenerator sowohl als Röhren- oder auch als Plattenozongeneratoren ausgebildet sein. Dabei ist die Anwendung bei Einspalt- als auch Mehrspaltsystemen vorgesehen. Das elektrisch leitende Material der Elektrode kann mit oder ohne Trägermaterial in den Entladungsraum eingebracht werden.

Durch die erfindungsgemäße Variation der Dichte des Flächengebildes, von dem die Entladungen ausgehen, ist es möglich, die der Elektrodenoberflächeneinheit zugeführte elektrische Leistung in Strömungsrichtung des Gases zu verringern und somit Einfluss auf die Gastemperatur im Entladungsspalt zu nehmen und den Wirkungsgrad des Ozongenerators zu erhöhen. Durch die besonders einfache Geometrie der Elektrodenanordnung ist der Ozongenerator einfach und kostengünstig herzustellen.

## Patentansprüche

1. Ozongenerator mit einer Hochspannungselektrode (5) und wenigstens einer Gegenelektrode (1), die einen Zwischenraum begrenzen, in dem wenigstens ein Dielektrikum (2) angeordnet ist und der von einem Gasstrom in Strömungsrichtung durchströmt wird, wobei die Hochspannungselektrode (5) und die wenigstens eine Gegenelektrode (1) mit einem Anschluss für eine elektrische Spannungsversorgung (7) zur Erzeugung von stillen Entladungen versehen sind, **dadurch gekennzeichnet, dass** ein Flächengebilde aus Draht in dem Gasstrom angeordnet ist, wobei die Dichte des Flächengebildes in Strömungsrichtung abnimmt.

2. Ozongenerator nach Anspruch 1, **dadurch gekennzeichnet, dass** eine freie Querschnittsfläche des Flächengebildes in Strömungsrichtung zunimmt.

3. Ozongenerator nach Anspruch 1 oder 2, **dadurch gekennzeichnet, dass** das Flächengebilde ein Geflecht ist, dessen Maschenweite in Strömungsrichtung kontinuierlich zunimmt.

4. Ozongenerator nach einem der vorhergehenden Ansprüche, **dadurch gekennzeichnet, dass** die Hochspannungselektrode (5) wenigstens teilweise aus dem Flächengebilde gebildet ist.

5. Ozongenerator nach einem der vorhergehenden Ansprüche, **dadurch gekennzeichnet, dass** die wenigstens eine Gegenelektrode (1) und die Hochspannungselektrode Platten sind, die einen Plattenozonerzeuger bilden.

6. Ozongenerator nach einem der vorhergehenden Ansprüche 1 bis 5, **dadurch gekennzeichnet, dass** die wenigstens eine Gegenelektrode (1) und die Hochspannungselektrode (5) rohrförmig und konzentrisch zueinander ausgerichtet sind, und dass das Flächengebilde eine runde Hohlschnur ist.

7. Ozongenerator nach einem der vorhergehenden Ansprüche, **dadurch gekennzeichnet, dass** eine einzige Gegenelektrode vorgesehen ist und die Hochspannungselektrode (5) aus dem Flächengebilde (5) gebildet ist, wobei das Dielektrikum (2) in Anlage an der Gegenelektrode (1) angeordnet ist.

8. Flächengebilde aus Draht zur Verwendung in einem Gasstrom eines Ozongenerators, **dadurch gekennzeichnet, dass** die Dichte des Flächengebildes entlang einer Längsachse des Flächengebildes abnimmt.

9. Flächengebilde nach Anspruch 8, **dadurch gekennzeichnet, dass** eine freie Querschnittsfläche des Flächengebildes entlang der Längsachse des Flächengebildes kontinuierlich oder abschnittsweise zunimmt.

10. Flächengebilde nach Anspruch 8 oder 9, **dadurch gekennzeichnet, dass** das Flächengebilde ein Geflecht ist, dessen Maschenweite entlang der Längsachse zunimmt.

11. Flächengebilde nach einem der Ansprüche 8, **dadurch gekennzeichnet, dass** das Flächengebilde ein Drahtgestrick ist, das mehrstückig in einzelne Abschnitte ausgebildet ist, wobei die Flächengebilde der einzelnen Abschnitte verschiedene Dichten aufweisen.

12. Flächengebilde nach Anspruch 11, **dadurch gekennzeichnet, dass** die einzelnen Abschnitte jeweils eine gleichbleibende Maschenweite aufweisen, wobei die Maschenweite entlang der Längsachse von Abschnitt zu Abschnitt zunimmt.

13. Elektrodenanordnung mit einem zentralen elektrisch nichtleitenden Stab, einem den Stab umgebenden Flächengebilde und einem das Flächengebilde umgebenden dielektrischen Rohr, die mit einem Gasstrom durch das Flächengebilde beaufschlagbar ist, **dadurch gekennzeichnet, dass** die Dichte des Flächengebildes entlang einer Längsachse des Flächengebildes abnimmt.

14. Elektrodenanordnung nach Anspruch 13, **dadurch gekennzeichnet, dass** eine freie Querschnittsfläche des Flächengebildes entlang der Längsachse kontinuierlich oder abschnittsweise zunimmt.

15. Elektrodenanordnung nach Anspruch 13 oder 14, **dadurch gekennzeichnet, dass** das Flächengebilde ein Geflecht ist, dessen Maschengröße entlang der Längsachse zunimmt.

## Claims

1. Ozone generator with a high-voltage electrode (5) and at least one counter electrode (1), which define an interstice, in which at least one dielectric (2) is arranged and though which a gas flows in the flow direction, wherein the high-voltage electrode (5) and the at least one counter electrode (1) are provided with a connection for an electrical voltage supply (7) to generate silent discharges, **characterised in that** a wire fabric is arranged in the gas flow, wherein the density of the fabric decreases in the flow direction.

2. Ozone generator according to claim 1, **characterised in that** a free cross-sectional area of the fabric increases in the flow direction.

3. Ozone generator according to claim 1 or 2, **characterised in that** the fabric is a mesh, the mesh size of which continuously increases in the flow direction.

4. Ozone generator according to any one of the preceding claims, **characterised in that** the high-voltage electrode (5) is formed at least partially of the fabric.

5. Ozone generator according to any one of the preceding claims, **characterised in that** the at least one counter electrode (1) and the high-voltage electrode are plates that form a plate ozone generator.

6. Ozone generator according to any one of the preceding claims 1 - 5, **characterised in that** the at least one counter electrode (1) and the high-voltage electrode (5) are tubular and aligned concentrically to one another, and **in that** the fabric is a round hollow line.

7. Ozone generator according to one of the above claims, **characterised in that** a single counter electrode is provided and the high-voltage electrode (5) is formed of the fabric (5), wherein the dielectric (2) is arranged in contact with the counter electrode (1).

8. Wire fabric for use in a gas flow of an ozone generator, **characterised in that** the density of the fabric decreases along a longitudinal axis of the fabric.

9. Fabric according to claim 8, **characterised in that** a free cross-sectional area of the fabric increases continuously or in sections along the longitudinal axis of the fabric.

10. Fabric according to claim 8 or 9, **characterised in that** the fabric is a mesh, the mesh size of which increases along the longitudinal axis.

11. Fabric according to any one of claims 8, **characterised in that** the fabric is a wire mesh, with a multi-part design with individual sections, wherein the fabrics of the individual sections have different densities.

12. Fabric according to claim 11, **characterised in that** the individual sections each have a constant mesh width, wherein the mesh width increases along the longitudinal axis from one section to the next.

13. Electrode arrangement with a central electrically non-conducting rod, a fabric surrounding the rod and a dielectric tube surrounding the fabric, that can be impinged upon by a gas flow through the fabric, **characterised in that** the density of the fabric decreases along a longitudinal axis of the fabric.

14. Electrode arrangement according to claim 13, **characterised in that** a free cross-sectional area of the fabric increases continuously or in sections along the longitudinal axis.

15. Electrode arrangement according to claim 13 or 14, **characterised in that** the fabric is a mesh, the mesh size of which increases along the longitudinal axis.

## Revendications

1. Générateur d'ozone avec une électrode haute tension (5) et au minimum une contre-électrode (1) délimitant un interstice, dans lequel est disposé au moins un diélectrique (2), et qui est traversé par un flux de gaz dans le sens d'écoulement, l'électrode haute tension (5) et la contre-électrode minimum (1) étant dotées d'une connexion pour une alimentation en tension électrique (7) pour la génération de décharges silencieuses, **caractérisé en ce qu'**un tissu en fil métallique est disposé dans le flux de gaz, la densité du tissu diminuant dans le sens de l'écoulement.

2. Générateur d'ozone selon la revendication 1, **caractérisé en ce qu'**une section transversale libre du tissu augmente dans le sens de l'écoulement.

3. Générateur d'ozone selon la revendication 1 ou 2, **caractérisé en ce que** le tissu est un entrelacement, dont la largeur de maille augmente en continu dans le sens de l'écoulement.

4. Générateur d'ozone selon l'une des revendications précédentes, **caractérisé en ce que** l'électrode haute tension (5) est au moins constituée partiellement par le tissu.

5. Générateur d'ozone selon l'une des revendications précédentes, **caractérisé en ce que** la contre-électrode minimum (1) et l'électrode haute tension sont des plaques, qui forment un ozoniseur à plaques.

6. Générateur d'ozone selon l'une des revendications 1 à 5 précédentes, **caractérisé en ce que** la contre-électrode minimum (1) et l'électrode haute tension (5) présentent l'une par rapport à l'autre une orientation tubulaire et concentrique et que le tissu forme un cordon creux rond.

7. Générateur d'ozone selon l'une des revendications précédentes, **caractérisé en ce que** seule une contre-électrode est prévue et que l'électrode haute tension (5) est formée à partir du tissu (5), le diélectrique (2) étant accolé à la contre-électrode (1).

8. Tissu en fil métallique pour utilisation dans un flux de gaz d'un générateur d'ozone, **caractérisée en ce que** la densité du tissu diminue le long d'un axe longitudinal du tissu.

9. Tissu selon la revendication 8, **caractérisé en ce qu'**une section transversale libre du tissu augmente en continu ou par tronçons le long de l'axe longitudinal du tissu.

10. Tissu selon la revendication 8 ou 9, **caractérisé en ce que** le tissu est un entrelacement, dont la largeur de maille augmente le long de l'axe longitudinal.

11. Tissu selon l'une des revendications 8, **caractérisé en ce que** le tissu est une structure tressée en fil métallique formée de plusieurs tronçons différents, le tissu des différents tronçons présentant différentes densités.

12. Tissu selon la revendication 11, **caractérisé en ce que** les tronçons individuels présentent respectivement une largeur de maille identique, la largeur de maille augmentant d'un tronçon à l'autre le long de l'axe longitudinal.

13. Système d'électrodes avec une tige centrale non conductrice de l'électricité, un tissu entourant la tige et un tube diélectrique entourant le tissu, permettant l'application d'un flux de gaz à travers le tissu, **caractérisé en ce que** la densité du tissu diminue le long de l'axe longitudinal du tissu.

14. Système d'électrodes selon la revendication 13, **caractérisé en ce qu'**une section transversale libre du tissu augmente en continu ou par tronçons le long de l'axe longitudinal.

15. Système d'électrodes selon la revendication 13 ou 14, **caractérisé en ce que** le tissu est un entrelacement dont la taille de maille augmente le long de l'axe longitudinal.
